(19) Europäisches Patentamt
European Patent Office
Office européen des brevets

(11) **EP 4 020 828 B1**

(12) **EUROPEAN PATENT SPECIFICATION**

(45) Date of publication and mention
of the grant of the patent:
**15.04.2026  Bulletin 2026/16**

(21) Application number: **20953502.0**

(22) Date of filing: **16.09.2020**

(51) International Patent Classification (IPC):
***H04B 5/26*** *(2024.01)*          ***H04M 1/02*** *(2006.01)*

(52) Cooperative Patent Classification (CPC):
**H04M 1/026; H04B 5/26;** H04M 2250/04

(86) International application number:
**PCT/CN2020/115540**

(87) International publication number:
**WO 2022/056709 (24.03.2022 Gazette 2022/12)**

(54) **NEAR-FIELD COMMUNICATION APPARATUS AND ELECTRONIC DEVICE**

NAHFELD-KOMMUNIKATIONSVORRICHTUNG UND ELEKTRONISCHES GERÄT

APPAREIL DE COMMUNICATION EN CHAMP PROCHE ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.06.2022  Bulletin 2022/26**

(73) Proprietor: **Shenzhen Goodix Technology Co.,
Ltd.
Shenzhen, Guangdong 518045 (CN)**

(72) Inventors:
• **LI, Jianxiong
  Shenzhen, Guangdong 518045 (CN)**
• **WANG, Haixiang
  Shenzhen, Guangdong 518045 (CN)**

(74) Representative: **Pfenning, Meinig & Partner mbB
Patent- und Rechtsanwälte
Theresienhöhe 11a
80339 München (DE)**

(56) References cited:
**EP-A1- 3 379 734          EP-A1- 3 461 017
EP-A1- 3 550 731          EP-A1- 3 576 248
CN-A- 104 184 435        CN-A- 106 537 801
CN-A- 108 737 999        CN-A- 108 781 090
CN-A- 109 088 657        CN-A- 110 549 929
CN-U- 201 898 506        CN-U- 201 898 506
US-A1- 2005 280 582      US-A1- 2017 180 013
US-A1- 2018 048 188**

Description

## TECHNICAL FIELD

Embodiments of the present application relate to the field of near filed communications, and more particularly, to a near field communication apparatus and an electronic device.

## BACKGROUND

With the development of the wireless communication technology, Near Field Communication (NFC) has become one of the essential functions of current mainstream mobile communication devices. NFC is a short-range wireless connection technology that allows non-contact point-to-point data transmission between electronic devices. Through the combination of the electronic device (such as a mobile phone) and the NFC technology, the user can realize contactless mobile payment in consumer places in daily life, such as buses, subways, and cinemas, as well as identity recognition functions such as access control management, swiping cards to and from get off work, using only mobile phones.

At present, there are more and more internal mobile phones components, and the space of the mobile phone is becoming more and more limited. Therefore, how to implement the NFC function in a limited space is an urgent problem to be solved.

EP3576248A1 discloses a wireless communication device and method. Near Field Communication-NFC-reader, intended to wireless cooperate with a transponder having an NFC transponder antenna, said reader comprising a NFC controller, a matching network coupled to said NFC controller, a receptacle capable to lodge at least partially said transponder, said receptacle having a bottom wall, a lateral wall and a shape designed in a way that the transponder cannot be placed in the receptacle such that said NFC transponder antenna is parallel to said bottom wall, said receptacle including at least two NFC reader antennas respectively contained in at least two non-parallel parts of said lateral wall, and connecting means configured to connect said at least two reader antennas to said matching network.

CN201898506U discloses a mobile phone with an NFC (near field communication) function and an NFC antenna thereof. In the NFC antenna, a first transmitting end of a radio frequency unit is connected with a first movable contact of a fourth controllable switch, a static contact of the fourth controllable switch is connected with a first end of an antenna coil, a second transmitting end is connected with a static contact of a first controllable switch, a first movable contact of the first controllable switch is connected with a first movable contact of a second controllable switch, a second movable contact of the first controllable switch is connected with a second movable contact of the second controllable switch, a static contact of the second controllable switch is connected with a second end of the antenna coil, a grounding end of the radio frequency unit is connected with a static contact of a third controllable switch, a first movable contact of the third controllable switch is connected with a middle point of the antenna coil, and a second movable contact of the third controllable switch is connected with a second movable contact of the fourth controllable switch.

EP3379734A1 discloses a near field communication (NFC) reader. The NFC reader includes a first section. The first section includes an NFC controller and a filter coupled to the NFC controller. The filter includes a filter capacitor. The first section further includes a first tuning circuit coupled to the filter. The first tuning circuit includes a tuner capacitor that is electrically coupled in parallel to the filter capacitor. The first tuning circuit is configured and adapted to be coupled to a coaxial cable. The NFC reader also includes a second section. The second section includes a second tuning circuit. The second tuning circuit includes a second tuner capacitor and a damping resistor. The second tuning circuit is configured and adopted to be coupled to the coaxial cable. The second section further includes an antenna coupled to the second tuning circuit.

EP3461017A1 discloses a method for operating a communications device that communicates via inductive coupling involves detecting a system condition associated with the communications device and tuning a matching network of the communications device in response to the system condition, where the matching network includes a hybrid transformer that separates a receiver of the communications device from a transmitter of the communications device. Other embodiments are also described.

US2018048188A1 discloses a wireless power transfer. The parameters of components of the wireless energy transfer system are adjusted to control the power delivered to the load at the device. The power output of the source amplifier is controlled to maintain a substantially 50% duty cycle at the rectifier of the device.

US2017180013A1 discloses a pulse width modulator that is provided with an oscillator signal at a communication carrier frequency. The pulse width modulator input is an amplified reference voltage that is regulated by a feedback loop. A modulation control provides the data signal to be transmitted. The modulation control may either be provided to the amplifier mixed with the reference voltage or may be provided to the pulse width modulator. A power transistor receives the pulse width modulator output and generates a chip output signal. An external filter is connected at the chip output to filter the signal that is provided to the communication antenna and produce a carrier sinusoid with an amplitude proportional to the pulse width modulated by voltage regulation and by the modulating data input. The power source is connected to the external filter. A differential version includes differential outputs from the pulse width modulator to two power transistors and through two external filters to a differential antenna.

## SUMMARY

The invention is set out in the appended set of claims.

## BRIEF DESCRIPTION OF DRAWINGS

FIG. 1 is a schematic diagram of driving a differential antenna in a differential driving manner.

FIG. 2 is a schematic diagram of driving a single-ended antenna in a differential driving manner.

FIG. 3 is a schematic structural diagram of an NFC apparatus according to an example not claimed in the present application.

FIG. 4 is a specific schematic diagram of an NFC apparatus according to an example not claimed in the present application.

FIG. 5 is another specific schematic diagram of an NFC apparatus according to an example not claimed in the present application.

FIG. 6 is a schematic structural diagram of another NFC apparatus according to an example not claimed in the present application.

FIG. 7 is a specific schematic diagram of an NFC apparatus according to an embodiment of the present application.

FIG. 8 is another specific schematic diagram of the NFC apparatus according to an embodiment of the present application.

FIG. 9 is a schematic block diagram of an electronic device according to an embodiment of the present application.

## DESCRIPTION OF EMBODIMENTS

Technical solutions of the present application are described below in combination with accompanying drawings.

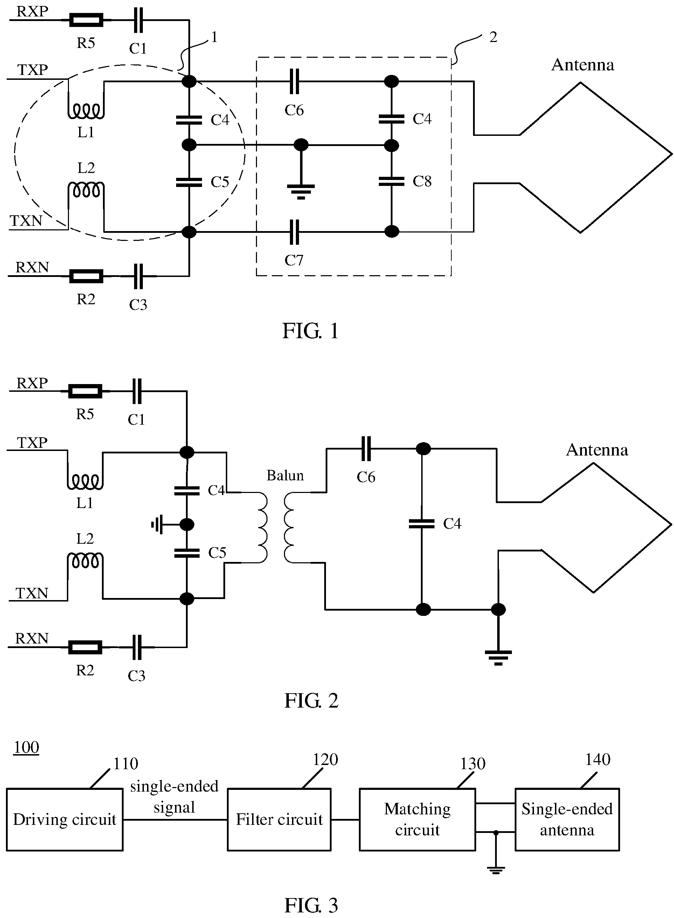

At present, in an NFC apparatus, a driving circuit of the NFC antenna can use a differential driving manner to drive the NFC antenna, and this driving manner can achieve high-efficiency driving by obtaining a higher driving voltage, where the NFC antenna is a differential antenna. However, because it is differential driving, as shown in FIG. 1, 1 in FIG. 1 represents a filter circuit, and 2 represents a matching circuit; the filter circuit is a symmetrical design, and the matching circuit is also a symmetrical design. In this case, the filter circuit and the matching circuit require a large number of components.

As an electronic device (such as a mobile phone) has more and more internal components and the space is becoming more and more limited, the size and shape of NFC antennas are greatly restricted. Mobile phone manufacturers hope that the size and shape of an NFC antenna can be as small as possible and the shape is possible to support layout requirements for internal component of different models of mobile phones. Since the differential antenna requires a complete coil loop, which requires too much space and shape, the differential antenna can no longer meet the current needs.

Since one end of the single-ended antenna is grounded, and the mobile phone is generally grounded through a middle frame, in this case, the single-ended antenna can be grounded through the middle frame of the mobile phone, that is, the middle frame of the mobile phone is used to realize the loop, and there is no need to have a complete coil loop like the differential antenna. Based on the above advantage of the single-ended antenna over the differential antenna, the NFC apparatus introduces the single-ended antenna, that is, NFC antenna is the single-ended antenna, which can reduce the high requirements of NFC antennas on the space and layout of the mobile phone to support more mobile phone layout requirements.

Among that, the single-ended antenna may also be called an unbalanced antenna, and a differential antenna may also be called a balanced antenna.

After the single-ended antenna is introduced, as shown in FIG. 2, the NFC apparatus can convert the differential driving manner to a single-ended driving manner through a Balanced to Unbalanced (Balun) transformer to drive the single-ended antenna. That is to say, FIG. 2 uses the differential driving manner and the Balun transformer to drive the single-ended antenna. However, the Balun transformer not only increases the material cost of the NFC apparatus, but also squeezes the space of the mobile phone, which is also difficult to accept when the space of the mobile phone is becoming more and more limited.

In view of this, the embodiment of the present application provides an NFC apparatus that can drive a single-ended antenna by adopting a single-ended driving manner without an additional Balun transformer. Since the cost of producing the Balun transformer is relatively high, the embodiment of the present application can reduce the material cost. Further, the volume of the Balun transformer is large. The NFC apparatus in the embodiment of the present application does not have a Balun transformer, so that the electronic device space equipped with the NFC apparatus can be reduced.

Optionally, the NFC apparatus of the embodiment of the present application may be a transmission end in the NFC communication system, that is, the NFC apparatus may generate an electromagnetic field and transmit a signal to the receiving end, and the receiving end may be coupled to the electromagnetic field to receive the signal sent by the NFC apparatus, so as to realize the communication between the NFC apparatus and the receiving end. When the NFC apparatus is the transmission end, the embodiment of the present application does not define the name of the NFC apparatus, that is to say, the NFC apparatus can also be referred to as other names. For example, the NFC apparatus may also be referred to as a polling device, a proximity coupling device (PCD) reader, a transmitter, and so on.

Optionally, the NFC apparatus in the embodiment of the present application may be the receiving end in the NFC communication system, that is, the NFC apparatus may be coupled to the electromagnetic field sent by the transmission end to receive the signal sent by the transmission end, so as to communicate with the transmission end. It should be understood that when the NFC apparatus is the receiving end, the NFC apparatus may also be referred to as a monitor, a listening device, a proximity integrated circuit card (PICC) tag, a target, or other names.

Of course, the NFC apparatus in the embodiment of the present application may also be a transceiver that integrates receiving and transmission, that is, the NFC apparatus can both send and receive signals.

In an embodiment not being part of the invention, FIG. 3 is a schematic block diagram of an NFC apparatus 100 according to an embodiment of this application. The NFC apparatus includes a driving circuit 110, a filter circuit 120, a matching circuit 130, and a single-ended antenna 140.

Specifically, the driving circuit 110 is used for outputting a transmission signal, the transmission signal being a single-ended square wave signal. The filter circuit 120 has a signal input end, and is used for receiving the transmission signal through the signal input end, and performing filtering processing on the received transmission signal to filter out harmonics in the transmission signal, so as to obtain the filtered transmission signal. It should be understood that the filtered transmission signal is a fundamental wave signal. The matching circuit 130 is used for achieving an impedance change, that is, adjusting an input impedance of a subsequent load circuit of the driving circuit 110 to a target impedance, so that the energy of the filtered transmission signal can reach the maximum, and transmitting the filtered transmission signal received from the filter circuit 120 to a single-ended antenna 140. Among that, the subsequent load circuit of the driving circuit 110 may include a filter circuit 120, a matching circuit 130, and a single-ended antenna 140. The first end of the single-ended antenna 140 is grounded and the single-ended antenna 140 is connected to the matching circuit 130. After receiving the filtered transmission signal sent by the matching circuit 130, the coil in the single-ended antenna 140 generates current, and the single-ended antenna 140 converts the current into an electromagnetic signal (or an electromagnetic wave), and the electromagnetic signal is transmitted within a predetermined communication range.

Among that, the filter circuit 120 has one signal input end, which can be understood as: the filter circuit 120 only has one signal input end.

In the embodiment of the present application, when the antenna in the NFC apparatus is a single-ended antenna, the driving circuit outputs a single-ended signal to a subsequent circuit, that is, the driving circuit adopts a single-ended driving manner to drive the single-ended antenna. Compared with the NFC apparatus shown in FIG. 2, there is no need to add an additional Balun transformer to convert the differential drive into a single-ended driving manner. Since the cost of producing the Balun transformer is relatively high, the embodiment of the present application can reduce the material cost. Further, compared with components such as the resistor and the capacitor, the volume of the Balun transformer is much larger than the volume of components such as the resistor and the capacitor. The NFC apparatus in the embodiment of the present application does not have a Balun transformer, so that the electronic device space equipped with the NFC apparatus can be reduced.

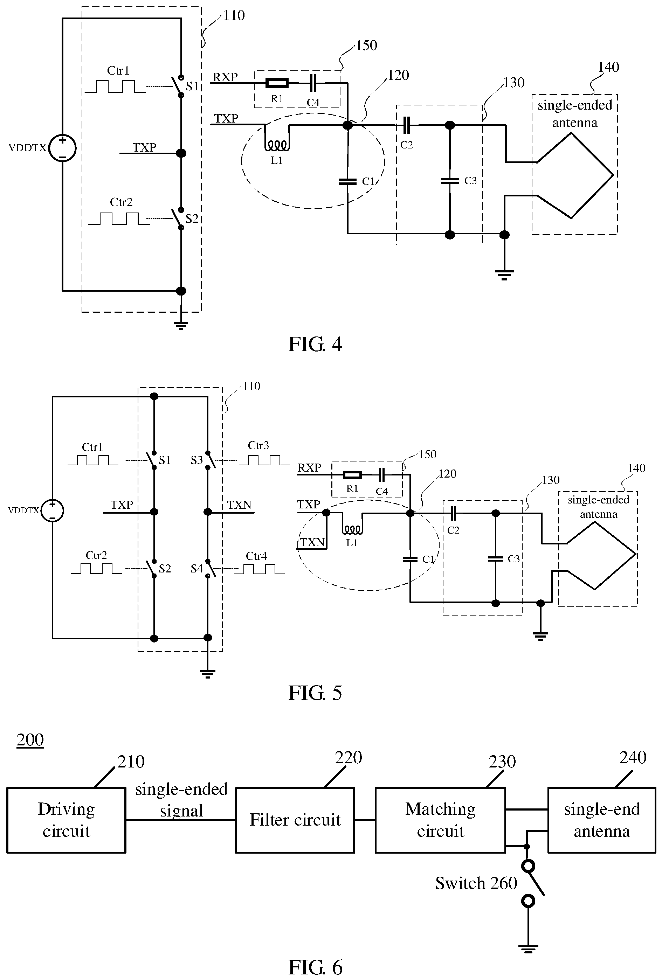

In order to better understand the embodiment of the present application, the following describes in detail the NFC apparatus in the embodiment of this application with reference to FIG. 4 to FIG. 8.

It should be noted that, in the embodiments of the present application, like reference numerals represent like components, and detailed description of the like components is omitted in different embodiments for the sake of brevity. It should be understood that dimensions such as thicknesses, lengths and widths of various components in the embodiments of the present application shown in the drawings, as well as dimensions of the overall thickness, length and width of an integrated apparatus are merely illustrative, and should not constitute any limitation to the present application.

In an embodiment not being part of the invention, FIG. 4 illustrates a specific embodiment of an NFC apparatus 100. As shown in FIG. 4, the driving circuit 110 is includes a first switch S1, a second switch S2, and a signal output end TXP. Among that, one end of the first switch S1 is connected to a positive electrode of the voltage source VDDTX, the other end is connected to the second switch S2, and the other end of the second switch S2 is connected to the negative electrode of the voltage source VDDTX and the ground, respectively. The first switch S1 is controlled by the control signal Ctr1, and the second switch S2 is controlled by the control signal Ctr2. Ctr1 and Ctr2 can be pulse width modulation (PWM) signals with an adjustable duty cycle and phase. Ctr1 and Ctr2 are in reverse phase. That is to say, when the first switch S1 is turned on (or referred to as closed), the second switch S2 is turned off (or referred to as open); and when the first switch S1 is turned off, the second switch S2 is turned on. The signal output end TXP is connected between the first switch S1 and the second switch S2.

Optionally, the first switch S1 and the second switch S2 may be, but not limited to, metal oxide semiconductor (MOS) transistors, triodes, or junction field effect transistors.

It should be understood that in the embodiment of the present application, "first" and "second" are merely used for distinguishing different objects, and are not intended to limit the scope of this embodiment of the present application.

The filter circuit 120 is an L-shaped LC filter, that is, including a filter inductor L1 and a filter capacitor C1.

The signal input end of the filter circuit 120 is connected to the signal output end TXP of the driving circuit 110. The driving circuit outputs the transmission signal through the signal output end TXP. The filter circuit 120 receives the transmission signal sent by the driving circuit 120 through the signal input end and performs filter processing on the transmission signal, to obtain the filtered transmission signal.

The matching circuit 130 is composed of a matching element. The matching circuit 130 in FIG. 4 includes a capacitor C2 and a capacitor C3, where a left plate of the capacitor C2 is connected to the filter inductor L1, a right plate is connected to an upper plate of the capacitor C3, and a lower plate of capacitor C3 is connected to the lower plate of the filter capacitor C1 of the filter circuit 120.

Optionally, the matching circuit 130 may change the capacitance of the capacitor C2 and the capacitor C3 to change the input impedance of the subsequent load circuit of the driving circuit 110.

Among that, the matching elements C2 and C3 can adjust the input impedance of the subsequent load circuit of the driving circuit 110 to the target impedance according to the following formulas:

$$C_2 = \frac{1}{2\pi f\left(X_{tr} - \sqrt{\frac{R_{tr}}{G_A} - R_{tr}^2}\right)} \qquad (1)$$

$$C_3 = \frac{\sqrt{\frac{G_A}{R_{tr}} - G_A^2} - B_A}{2\pi f} \qquad (2)$$

$$R_{tr} = \frac{R_{t\arg et}}{(1-\omega^2 L_1 C_1)^2 + (\omega R_{t\arg et} C_1)^2} \qquad (3)$$

$$X_{tr} = \frac{\omega L_1 (1-\omega^2 L_1 C_1) - \omega R_{t\arg et}^2 C_1}{(1-\omega^2 L_1 C_1)^2 + (\omega R_{t\arg et} C_1)^2} \qquad (4)$$

$$\omega = 2\pi f \qquad (5)$$

Among that, $R_{target}$ is the target impedance, $f$ is the operating frequency of the NFC apparatus 100, such as $f = 13.56\,\text{MHz}$, $G_A$ is a real part of the reciprocal of the impedance of the single-ended antenna 140, and $B_A$ is an imaginary part of the reciprocal of the impedance of the single-ended antenna 140, $L_1$ is the inductance value of the filter inductor L1, and $C_1$ is the capacitance value of the filter capacitor C1.

Optionally, the matching circuit 130 may also be composed of other matching elements. For example, the matching circuit may include a capacitor and an inductor or other components.

It should be understood that, in addition to filtering out harmonics in the transmission signal, the filter circuit 120 of the embodiment of the present application can also be used to implement impedance changes. In other words, the filter circuit 120 and the matching element as a whole can adjust the input impedance of the subsequent load circuit to the target impedance, so that the energy of the filtered transmission signal can reach the maximum.

The second end of the single-ended antenna 140 is connected between the capacitor C2 and the capacitor C3, and the first end is grounded. Exemplarily, the single-ended antenna 140 may be grounded through a middle frame of the mobile phone.

As mentioned above, the NFC apparatus 100 may also be a transceiver that integrates receiving and transmission, that is, the single-ended antenna 140 has a transmission mode and a receiving mode. Specifically, when the single-ended antenna 140 is in the transmission mode, the NFC apparatus 100 transmits the transmission signal within the predetermined communication range; and when the single-ended antenna 140 is in the receiving mode, the single-ended antenna 140 can be used to receive the near field communication signal of the peer NFC apparatus within the predetermined communication range. Therefore, the NFC apparatus 100 may further include a receiving positive terminal RXP, and the receiving positive terminal RXP may be coupled to the second end of the single-ended antenna 140 through a receiving element 150 and a matching circuit 130 in a receiving path, for receiving the near field communication signal from the single-ended antenna 140. In the NFC apparatus 100 shown in FIG. 4, the single-ended antenna 140 can receive the near field communication signal sent by the opposite NFC apparatus within a predetermined communication range in a single-ended driving manner.

Optionally, the receiving element 150 may include a resistor R1 and a capacitor C4 in series.

In an embodiment not being part of the invention, FIG. 5 is another specific embodiment of the NFC apparatus 100. As shown in FIG. 5, in addition to the first switch S1, the second switch S2, and the signal output end TXP, the driving circuit 110 is also includes a third switch S3, a fourth switch S4, and a second signal output end (that is, a signal output end TXN).

Among that, the third switch S3 is controlled by a control signal Ctr3, and the fourth switch S4 is controlled by a control signal Ctr4. Similar to Ctr1 and Ctr2, Ctr3 and Ctr4 can also be PWM signals with an adjustable duty cycle and phase. Ctr1 and Ctr3 are in phase, Ctr2 and Ctr4 are in phase, and Ctr1 and Ctr2 are in reverse phase, that is to say, when the first switch S1 and the third switch S3 are turned on, the second switch S2 and the fourth switch S4 are turned off; and when the first switch S1 and the third switch S3 are turned off, the second switch S2 and the fourth switch S4 are turned on. It can be seen from FIG. 5 that the driving circuit 110 of FIG. 5 is a full-bridge circuit, and the first switch S1, the second switch S2, the third switch S3, and the fourth switch S4 are 4 bridge arms of the full-bridge circuit, respectively.

Alternatively, the first switch S1 and the third switch S3 is controlled by the same control signal, for example, both are controlled by Ctrl; and the second switch S2 and the fourth switch S4 is also be controlled by the same control signal, for example, both can be controlled by Ctr2.

The signal output end TXP of the driving circuit 110 is connected between the first switch S1 and the second switch S2, and the signal output end TXN is connected between the third switch S3 and the fourth switch S4. The driving circuit 110 outputs a transmission signal through the signal output end TXP and the signal output end TXN.

Since the first switch S1 and the third switch S3 are in phase control, and the second switch S2 and the fourth switch S4 are in phase control, output signals of the two signal output ends TXP and TXN of the driving circuit 110 are in phase. Therefore, after connected in parallel, the TXP and TXN are connected with the signal input end of the filter circuit 120 to drive the subsequent circuit. Thus, the output power of the driving circuit 110 can be the sum of the power output through the signal output end TXP and the power output from the signal output end TXN.

It should be understood that the detailed description of other circuits, such as the matching circuit 130 and the single-ended antenna 140, can be referred to FIG. 4, which will not be described here for brevity.

It can be seen that, in the NFC apparatus shown in FIG. 4, compared with the NFC apparatus shown in FIG. 5, the number of components of the driving circuit is less than the number of components of the driving circuit in FIG. 5, so the material cost can be further reduced.

Compared with the NFC apparatus shown in FIG. 2, when the antenna is a single-ended antenna, the NFC apparatus shown in FIG. 4 and FIG. 5 can drive the single-ended antenna without a Balun transformer. In addition, in the NFC apparatus shown in FIG. 4 and FIG. 5, the filter circuit includes an inductor and a capacitor, and the receiving end includes a capacitor and a resistor. In the NFC apparatus shown in FIG. 2, the filter circuit includes two inductors and two capacitors, the receiving positive terminal includes a capacitor and a resistor, and the receiving negative terminal also includes a capacitor and a resistor. In general, compared with the NFC apparatus shown in FIG. 2, the NFC apparatus shown in FIG. 4 and FIG. 5 is less in a Balun transformer, an inductor, two capacitors and a resistor, and the volume and the production cost of the Balun transformer are much greater than the volume and production cost of other electronic components (such as the resistor). Therefore, the NFC apparatus shown in FIG. 4 and FIG. 5 reduces the material cost of the NFC apparatus and saves the space of the electronic device integrated with the NFC apparatus.

It can be seen from FIGS. 3 to 5 that the first end of the single-ended antenna 140 is directly grounded, that is, the first end of the single-ended antenna 140 is grounded, but not through a switching element or other components.

The embodiment of the present application also provides another NFC apparatus 200. As shown in FIG. 6, the NFC apparatus 200 include: a driving circuit 210, a filter circuit 220, a matching circuit 230, a single-ended antenna 240, and a changeover switch 260.

The driving circuit 210, the filter circuit 220, the matching circuit 230, and the single-ended antenna 240 in FIG. 6 may correspond to the driving circuit 110, the filter circuit 120, the matching circuit 130, and the single-ended antenna 140 in FIG. 3, respectively. For the specific working manner, please refer to the description of FIG. 3, which will not be described here.

In an embodiment not being part of the invention, one end of the changeover switch 260 is grounded, and the other end may be connected to the first end of the single-ended antenna 240. When the changeover switch 260 is in the closed state, the single-ended antenna 240 may be in the transmission mode or the receiving mode; and when the changeover switch 260 is in the turned-off state, the single-ended antenna 240 may be in the receiving mode.

Specifically, when the single-ended antenna 240 is in the transmission mode, the changeover switch 260 is closed, and the driving manner of the NFC apparatus 200 is a single-ended driving manner. When the single-ended antenna 240 is in the receiving mode, the NFC apparatus 200 may have two types of receiving manner: the manner 1, if the changeover switch 260 is closed, the receiving manner of the single-ended antenna 240 is single-ended receiving manner; and the manner 2, if the changeover switch 260 is in the turned-off state, the receiving manner of the single-ended antenna 240 is the differential receiving manner, which can be understood as the conversion of a single-ended antenna to a differential antenna.

It can be seen that when the changeover switch 260 is turned off, the single-ended antenna 240 is in the receiving mode, and when the changeover switch 260 is closed, the single-ended antenna 240 can be in the transmission mode. Therefore, the NFC apparatus 200 in this case are not drived and received at the same time.

Therefore, the NFC apparatus 200 can perform differential receiving in a card emulation mode or a peer-to-peer mode. Among that, the card emulation mode refers to emulating an electronic device with the NFC function into a tag or contactless card. For example, a mobile phone supporting the NFC function can be read as an access card, a bank card, etc. The card emulation mode can realize the "mobile wallet" function. This mode can be mainly used in non-contact mobile payment applications such as shopping malls and transportation. A user only needs to move the phone close to the card reader and enter the password to confirm the transaction or receive the transaction directly.

The peer-to-peer mode refers to connecting two electronic devices with the NFC function to realize peer-to-peer data transmission. For example, two mobile phones with the NFC function can exchange contact information.

The NFC apparatus 200 can perform single-ended reception in the card emulation mode, the peer-to-peer mode, and a card reader mode. Among that, the card reader mode means that the NFC apparatus can be used as a contactless reader. For example, a mobile phone that supports NFC plays the role of a reader when interacting with a tag. A mobile phone with the NFC function enabled can read, write and support a tag that supports an NFC data format standard.

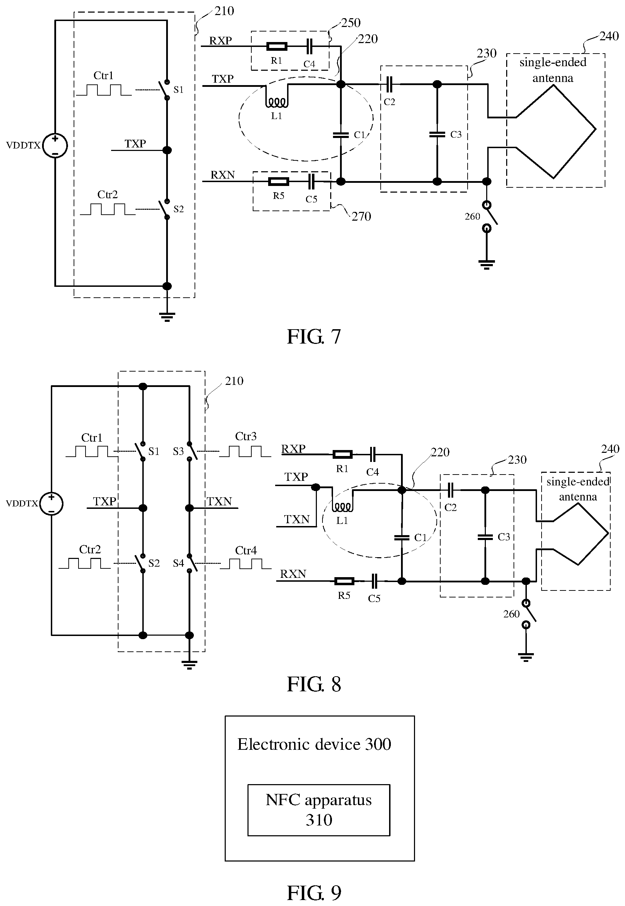

FIG. 7 illustrates a specific embodiment of an NFC apparatus 200. It can be seen from FIG. 7 that, compared with the NFC apparatus shown in FIG. 4, the NFC apparatus 200 shown in FIG. 7 adds a changeover switch 260, a receiving element 270, and a receiving negative terminal RXN. The receiving element 250 in FIG. 7 may be the receiving element 150 in FIG. 4.

Among that, one end of the changeover switch 260 is connected to the first end of the single-ended antenna 240, and the other end is grounded. When the changeover switch 260 is closed, the single-ended antenna 240 is in a single-ended receiving state; and when the changeover switch 260 is turned off, the single-ended antenna 240 is in a differential receiving state.

The receiving negative terminal RXN may be coupled to the first end of the single-ended antenna 240 through the receiving element 270 in the receiving path, for receiving the near field communication signal from the single-ended antenna 240 transmitted to it through the receiving path. As an example, the receiving element 270 may include a resistor R5 and a capacitor C5 in series.

FIG. 8 illustrates a specific embodiment of an NFC apparatus 200. It can be seen from FIG. 8 that, compared with the NFC apparatus shown in FIG. 5, the NFC apparatus 200 shown in FIG. 8 adds a changeover switch 260, a receiving element 270, and a receiving negative terminal RXN.

Among that, one end of the changeover switch 260 is connected to the first end of the single-ended antenna 240, and the other end is grounded. When the changeover switch 260 is closed, the single-ended antenna 240 is in a single-ended receiving state; and when the changeover switch 260 is turned off, the single-ended antenna 240 is in a differential receiving state.

The receiving negative terminal RXN may be coupled to the first end of the single-ended antenna 240 through a resistor R5 and a capacitor C5 in series, for receiving the received signal from the single-ended antenna 240 transmitted to it through the receiving path.

It can be seen from FIG. 6 - FIG. 8 that the first end of the single-ended antenna 240 is grounded through the changeover switch 260, that is, the first end of the single-ended antenna 240 is not directly grounded.

The above technical solution enables the NFC apparatus to be compatible with single-ended driving and differential receiving at the same time through a changeover switch, and in this differential receiving manner, the receiving sensitivity of the NFC apparatus will not decrease. In addition, compared with the NFC apparatus shown in FIG. 2, the NFC apparatus of FIG. 7 and FIG. 8 does not have a Balun transformer, the filter circuit is less in one inductor, and a first capacitor includes two inductors and two capacitors, and the volume and the production cost of the Balun transformer are much greater than the volume and production cost of other electronic components (such as the resistor). Therefore, the NFC apparatus shown in FIG. 7 and FIG. 8 reduces the material cost of the NFC apparatus and saves the space of the electronic device integrated with the NFC apparatus, while ensuring the receiving sensitivity of the NFC apparatus.

It should be noted that there may be many implementations for the NFC apparatus of the embodiments of the present application. FIG. 3 - FIG. 8 are the exemplary illustration of the NFC apparatus only, and are just for helping those skilled in the art better understand the embodiments of the present application, rather than for limiting the scope of the embodiments of the present application.

An embodiment of the present application also provides an electronic device. As shown in FIG. 9, the electronic device 300 may include an NFC apparatus 310. The NFC apparatus 310 may be the NFC apparatus 100 or the NFC apparatus 200 in the above embodiments.

By way of example and not limitation, the electronic device in the embodiment of the present application may be any portable or mobile computing devices with the NFC function such as a terminal device, a mobile phone, a tablet computer, a notebook computer, a desktop computer, a gaming device, an in-vehicle electronic device or a wearable smart device, photographing devices such as a digital camera, a static camera, and a camera, but also an Automatic Teller Machine (ATM), and an access control and so on. The wearable smart device is full-featured and large-sized and can realize complete or partial functions without relying on a smart phone, such as a smart watch or smart glasses, and only focuses on a certain type of application function, and shall be used in cooperation with such other device as a smart phone, such as various types of smart bracelets, smart jewelry and other devices for physical sign monitoring.

It should be understood that terms used in embodiments of the present application and the claims appended hereto are merely for the purpose of describing particular embodiments, and are not intended to limit the embodiments of the present application. For example, the use of a singular form of "a", "the above" and "said" in the embodiments of the present application and the claims appended hereto are also intended to include a plural form, unless otherwise clearly indicated herein by context.

The units described as separate parts may or may not be physically separate, and parts displayed as units may or may not be physical units, may be located in one position, or may be distributed on multiple network units. Some or all of the units may be selected to achieve the purposes of the solutions in the present embodiments according to actual needs.

In addition, functional units in the embodiments of the present disclosure may be integrated into one processing unit, or each of the units may exist alone physically, or two or more units are integrated into one unit. The foregoing integrated unit may be implemented in the form of hardware or in the form of a software functional unit.

The foregoing description is only a specific implementation manner of the present application. The protection scope of the present application, however, is not limited thereto but is defined in the appended claims. Therefore, the protection scope of the present application shall be subject to the protection scope of the claims.

## Claims

1.    A near field communication apparatus, comprising:

a driving circuit (110), for outputting a transmission signal, the transmission signal being a single-ended signal;
a filter circuit (120), having a signal input end for receiving the transmission signal through the signal input end to perform filtering processing on the transmission signal to obtain the filtered transmission signal;
a matching circuit (130), for adjusting an input impedance of a subsequent load circuit of the driving circuit (110) to a target impedance, and transmitting the received filtered transmission signal to an antenna (140);
the antenna (140), connected to the matching circuit (130), for transmitting the filtered transmission signal within a predetermined communication range;
wherein the filter circuit (120) comprises a filter inductor (L1) and a filter capacitor (C1), and one end of the filter inductor (L1) is connected to the signal input end, the other end is connected with an upper plate of the filter capacitor (C1), and the lower plate of the filter capacitor (C1) is connected to a first end of the antenna (140);
wherein the matching circuit (130) comprises a first capacitor (C2) and a second capacitor (C3), a left plate of the first capacitor (C2) is connected to the filter inductor (L1), a right plate of the first capacitor (C2) is connected to an upper plate of the second capacitor (C3), a lower plate of the second capacitor (C3) is connected to the lower plate of the filter capacitor (C1) of the filter circuit (120), the first end of the antenna (140) is connected to the lower plate of the second capacitor (C3), and the second end of the antenna (140) is connected to the upper plate of the second capacitor (C3);
wherein the near field communication apparatus further comprises a changeover switch (260), one end of the changeover switch (260) being grounded, and the other end being connected to the first end of the antenna (140), when the changeover switch (260) is closed, the antenna (140) is in a single-ended receiving state; and when the changeover switch (260) is open, the antenna (140) is in a differential receiving state.

2.    The near field communication apparatus according to claim 1, wherein the driving circuit (110) comprises a first switch (S1), a second switch (S2) and a first output end (TXP);

wherein one end of the first switch (S1) is connected to a positive electrode of a voltage source, the other end of the first switch (S1) is connected to one end of the second switch (S2), and the other end of the second switch (S2) is connected to a negative electrode of the voltage source and the ground, the second switch (S2) is opened when the first switch (S1) is closed, or the second switch (S2) is closed when the first switch (S1) is opened, and the first output end is connected between the first switch (S1) and the second switch (S2).

3. The near field communication apparatus according to claim 2, wherein the driving circuit (110) further comprises a third switch (S3), a fourth switch and a second output end, one end of the third switch (S3) is connected to the first switch (S1), the other end of the third switch (S3) is connected to the fourth switch (S4), the other end of the fourth switch (S4) is grounded, and the second output end is connected between the third switch (S3) and the fourth switch (S4);

wherein, the first switch (S1) and the third switch (S3) is controlled by the same control signal, the second switch (S2) and the fourth switch (S4) is controlled by the same control signal, the third switch (S3) and the first switch (S1) are closed or opened at the same time, and the fourth switch (S4) and the second switch (S2) are closed or opened at the same time.

4. The near field communication apparatus according to claim 3, wherein the transmission signal output by the first output end is the same as the transmission signal output by the second output end, and the first output end is connected in parallel to the second output end, and is connected to the signal input end of the filter circuit (120).

5. The near field communication apparatus according to claim 1, wherein the near field communication apparatus further comprises:
a receiving negative terminal, connected to the first end of the antenna (140) through a resistor and a capacitor in series, the receiving negative terminal being used to receive the near field communication signal from the antenna (140).

6. The near field communication apparatus according to any one of claims 1 to 5, wherein the antenna (140) is further used to receive a near field communication signal sent by a peer near field communication apparatus within the predetermined communication range, and the near field communication apparatus further comprises:
a receiving positive terminal, connected to a second end of the antenna (140) through a resistor and a capacitor in series, and the receiving positive terminal is used to receive the near field communication signal from the antenna (140).

7. An electronic device, comprising:
the near field communication apparatus according to any one of claims 1 to 6.

**Patentansprüche**

1. Nahfeldkommunikationsvorrichtung, umfassend:

eine Treiberschaltung (110) zum Ausgeben eines Übertragungssignals, wobei das Übertragungssignal ein unsymmetrisches Signal ist;
eine Filterschaltung (120) mit einem Signaleingangsende zum Empfangen des Übertragungssignals über das Signaleingangsende zum Durchführen einer Filterverarbeitung an dem Übertragungssignal, um das gefilterte Übertragungssignal zu erhalten;
eine Anpassungsschaltung (130) zum Einstellen einer Eingangsimpedanz einer nachfolgenden Lastschaltung der Treiberschaltung (110) auf eine Zielimpedanz und zum Übertragen des empfangenen gefilterten Übertragungssignals an eine Antenne (140);
die Antenne (140), die mit der Anpassungsschaltung (130) verbunden ist, zum Übertragen des gefilterten Übertragungssignals innerhalb eines vorbestimmten Kommunikationsbereichs;
wobei die Filterschaltung (120) eine Filterinduktivität (L1) und einen Filterkondensator (C1) umfasst und wobei ein Ende der Filterinduktivität (L1) mit dem Signaleingangsende verbunden ist, das andere Ende mit einer oberen Platte des Filterkondensators (C1) verbunden ist und die untere Platte des Filterkondensators (C1) mit einem ersten Ende der Antenne (140) verbunden ist;
wobei die Anpassungsschaltung (130) einen ersten Kondensator (C2) und einen zweiten Kondensator (C3) umfasst, wobei eine linke Platte des ersten Kondensators (C2) mit der Filterinduktivität (L1) verbunden ist, eine rechte Platte des ersten Kondensators (C2) mit einer oberen Platte des zweiten Kondensators (C3) verbunden ist, eine untere Platte des zweiten Kondensators (C3) mit der unteren Platte des Filterkondensators (C1) der Filterschaltung (120) verbunden ist, das erste Ende der Antenne (140) mit der unteren Platte des zweiten Kondensators (C3) verbunden ist und das zweite Ende der Antenne (140) mit der oberen Platte des zweiten Kondensators (C3) verbunden ist;

wobei die Nahfeldkommunikationsvorrichtung ferner einen Umschalter (260) umfasst, wobei ein Ende des Umschalters (260) geerdet ist und das andere Ende mit dem ersten Ende der Antenne (140) verbunden ist, wobei, wenn der Umschalter (260) geschlossen ist, sich die Antenne (140) in einem unsymmetrischen Empfangszustand befindet; und wobei, wenn der Umschalter (260) offen ist, sich die Antenne (140) in einem differenziellen Empfangszustand befindet.

2. Nahfeldkommunikationsvorrichtung nach Anspruch 1, wobei die Treiberschaltung (110) einen ersten Schalter (S1), einen zweiten Schalter (S2) und ein erstes Ausgangsende (TXP) umfasst;

wobei ein Ende des ersten Schalters (S1) mit einer positiven Elektrode einer Spannungsquelle verbunden ist, das andere Ende des ersten Schalters (S1) mit einem Ende des zweiten Schalters (S2) verbunden ist und das andere Ende des zweiten Schalters (S2) mit einer negativen Elektrode der Spannungsquelle und der Masse verbunden ist, wobei der zweite Schalter (S2) geöffnet wird, wenn der erste Schalter (S1) geschlossen wird, oder der zweite Schalter (S2) geschlossen wird, wenn der erste Schalter (S1) geöffnet wird, und wobei das erste Ausgangsende zwischen dem ersten Schalter (S1) und dem zweiten Schalter (S2) geschaltet ist.

3. Nahfeldkommunikationsvorrichtung nach Anspruch 2, wobei die Treiberschaltung (110) ferner einen dritten Schalter (S3), einen vierten Schalter und ein zweites Ausgangsende umfasst, wobei ein Ende des dritten Schalters (S3) mit dem ersten Schalter (S1) verbunden ist, das andere Ende des dritten Schalters (S3) mit dem vierten Schalter (S4) verbunden ist, das andere Ende des vierten Schalters (S4) geerdet ist und das zweite Ausgangsende zwischen dem dritten Schalter (S3) und dem vierten Schalter (S4) geschaltet ist;

wobei der erste Schalter (S1) und der dritte Schalter (S3) durch dasselbe Steuersignal gesteuert werden, der zweite Schalter (S2) und der vierte Schalter (S4) durch dasselbe Steuersignal gesteuert werden, der dritte Schalter (S3) und der erste Schalter (S1) gleichzeitig geschlossen oder geöffnet werden und der vierte Schalter (S4) und der zweite Schalter (S2) gleichzeitig geschlossen oder geöffnet werden.

4. Nahfeldkommunikationsvorrichtung nach Anspruch 3, wobei das durch das erste Ausgangsende ausgegebene Übertragungssignal dasselbe ist wie das durch das zweite Ausgangsende ausgegebene Übertragungssignal und das erste Ausgangsende zum zweiten Ausgangsende parallel geschaltet ist und mit dem Signaleingangsende der Filterschaltung (120) verbunden ist.

5. Nahfeldkommunikationsvorrichtung nach Anspruch 1, wobei die Nahfeldkommunikationsvorrichtung ferner umfasst:
einen negativen Empfangsanschluss, der über einen Widerstand und einen Kondensator in Reihe mit dem ersten Ende der Antenne (140) verbunden ist, wobei der negative Empfangsanschluss zum Empfangen des Nahfeldkommunikationssignals von der Antenne (140) verwendet wird.

6. Nahfeldkommunikationsvorrichtung nach einem der Ansprüche 1 bis 5, wobei die Antenne (140) ferner zum Empfangen eines Nahfeldkommunikationssignals verwendet wird, das durch eine Gegenstellen-Nahfeldkommunikationsvorrichtung innerhalb des vorbestimmten Kommunikationsbereichs gesendet wird, und wobei die Nahfeldkommunikationsvorrichtung ferner umfasst:
einen positiven Empfangsanschluss, der über einen Widerstand und einen Kondensator in Reihe mit einem zweiten Ende der Antenne (140) verbunden ist, und wobei der positive Empfangsanschluss zum Empfangen des Nahfeldkommunikationssignals von der Antenne (140) verwendet wird.

7. Elektronische Vorrichtung, umfassend:
die Nahfeldkommunikationsvorrichtung nach einem der Ansprüche 1 bis 6.

## Revendications

1. Appareil de communication en champ proche, comprenant :

un circuit d'entraînement (110), pour émettre un signal de transmission, le signal de transmission étant un signal à une extrémité ;
un circuit de filtrage (120), ayant une extrémité d'entrée de signal pour recevoir le signal de transmission à travers l'extrémité d'entrée de signal afin d'effectuer un traitement de filtrage sur le signal de transmission pour obtenir un signal de transmission filtré ;

un circuit d'adaptation (130), pour ajuster une impédance d'entrée d'un circuit de charge ultérieur du circuit d'entraînement (110) à une impédance cible, et transmettre le signal de transmission filtré reçu vers une antenne (140) ;

l'antenne (140), connectée au circuit d'adaptation (130), pour transmettre le signal de transmission filtré dans une plage de communication prédéterminée ;

dans lequel le circuit de filtrage (120) comprend un inducteur de filtrage (L1) et un condensateur de filtrage (C1), et une extrémité de l'inducteur de filtrage (L1) est connectée à l'extrémité d'entrée de signal, l'autre extrémité est connectée à une plaque supérieure du condensateur de filtrage (C1), et une plaque inférieure du condensateur de filtrage (C1) est connectée à une première extrémité de l'antenne (140) ;

dans lequel le circuit d'adaptation (130) comprend un premier condensateur (C2) et un deuxième condensateur (C3), une plaque gauche du premier condensateur (C2) est connectée à l'inducteur de filtre (L1), une plaque droite du premier condensateur (C2) est connectée à une plaque supérieure du deuxième condensateur (C3), une plaque inférieure du deuxième condensateur (C3) est connectée à la plaque inférieure du condensateur de filtrage (C1) du circuit de filtrage (120), la première extrémité de l'antenne (140) est connectée à la plaque inférieure du deuxième condensateur (C3), et la deuxième extrémité de l'antenne (140) est connectée à la plaque supérieure du deuxième condensateur (C3) ;

dans lequel l'appareil de communication en champ proche comprend en outre un commutateur (260), une extrémité du commutateur (260) étant mise à la terre, et l'autre extrémité étant connectée à la première extrémité de l'antenne (140), lorsque le commutateur (260) est fermé, l'antenne (140) se trouve dans un état de réception à une extrémité ; et lorsque le commutateur (260) est ouvert, l'antenne (140) est dans un état de réception différentiel.

2. Appareil de communication en champ proche selon la revendication 1, dans lequel le circuit d'entraînement (110) comprend un premier interrupteur (S1), un deuxième interrupteur (S2) et une première extrémité de sortie (TXP) ;

dans lequel une extrémité du premier interrupteur (S1) est connectée à une électrode positive d'une source de tension, l'autre extrémité du premier interrupteur (S1) est connectée à une extrémité du deuxième interrupteur (S2), et l'autre extrémité du deuxième interrupteur (S2) est connectée à une électrode négative de la source de tension et à la terre, le deuxième interrupteur (S2) est ouvert lorsque le premier interrupteur (S1) est fermé, ou le deuxième interrupteur (S2) est fermé lorsque le premier interrupteur (S1) est ouvert, et la première extrémité de sortie étant connectée entre le premier interrupteur (S1) et le deuxième interrupteur (S2).

3. Appareil de communication en champ proche selon la revendication 2, dans lequel le circuit d'entraînement (110) comprend en outre un troisième interrupteur (S3), un quatrième interrupteur et une deuxième extrémité de sortie, une extrémité du troisième interrupteur (S3) est connectée au premier interrupteur (S1), l'autre extrémité du troisième interrupteur (S3) est connectée au quatrième interrupteur (S4), l'autre extrémité du quatrième interrupteur (S4) est mise à la terre, et la deuxième extrémité de sortie est connectée entre le troisième interrupteur (S3) et le quatrième interrupteur (S4) ;

dans lequel, le premier interrupteur (S1) et le troisième interrupteur (S3) sont commandés par le même signal de commande, le deuxième interrupteur (S2) et le quatrième interrupteur (S4) sont commandés par le même signal de commande, le troisième interrupteur (S3) et le premier interrupteur (S1) sont fermés ou ouverts en même temps, et le quatrième interrupteur (S4) et le deuxième interrupteur (S2) sont fermés ou ouverts en même temps.

4. Appareil de communication en champ proche selon la revendication 3, dans lequel le signal de transmission émis par la première extrémité de sortie est le même que le signal de transmission émis par la deuxième extrémité de sortie, et la première extrémité de sortie est connectée en parallèle à la deuxième extrémité de sortie, et est connectée à l'extrémité d'entrée de signal du circuit de filtrage (120).

5. Appareil de communication en champ proche selon la revendication 1, dans lequel l'appareil de communication en champ proche comprend en outre :

un terminal négatif de réception, connecté à la première extrémité de l'antenne (140) par l'intermédiaire d'une résistance et d'un condensateur en série, le terminal négatif de réception étant utilisé pour recevoir le signal de communication en champ proche à partir de l'antenne (140).

6. Appareil de communication en champ proche selon l'une quelconque des revendications 1 à 5, dans lequel l'antenne (140) est en outre utilisée pour recevoir un signal de communication en champ proche envoyé par un appareil de communication en champ proche pair dans la plage de communication prédéterminée, et l'appareil de communication en champ proche comprend en outre :

un terminal positif de réception, connecté à une deuxième extrémité de l'antenne (140) par l'intermédiaire d'une résistance et d'un condensateur en série, le terminal positif de réception étant utilisé pour recevoir le signal de communication en champ proche à partir de l'antenne (140).

7. Dispositif électronique, comprenant :

l'appareil de communication en champ proche selon l'une quelconque des revendications 1 à 6.

FIG. 1

FIG. 2

FIG. 3

FIG. 4

FIG. 5

FIG. 6

FIG. 7

FIG. 8

Electronic device 300

NFC apparatus
310

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3576248 A1
- CN 201898506 U
- EP 3379734 A1
- EP 3461017 A1
- US 2018048188 A1
- US 2017180013 A1